(19) **Europäisches Patentamt**

**European Patent Office**

**Office européen des brevets**

(11) **EP 1 304 578 A2**

(12) **EUROPÄISCHE PATENTANMELDUNG**

(43) Veröffentlichungstag:
**23.04.2003 Patentblatt 2003/17**

(51) Int Cl.⁷: **G01P 3/489**

(21) Anmeldenummer: **02102324.7**

(22) Anmeldetag: **06.09.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **28.09.2001 DE 10148019**

(71) Anmelder: **SIEMENS AKTIENGESELLSCHAFT
80333 München (DE)**

(72) Erfinder:
• **Falco, Marco, Dr.
97070, Würzburg (DE)**
• **Götze, Thomas
09113, Chemnitz (DE)**
• **Schraud, Joachim
91056, Erlangen (DE)**
• **Voit, Alexander
97279, Prosselsheim (DE)**
• **Johanning, Hans-Peter
61449, Steinbach (DE)**

(54) **Verfahren und Vorrichtung zur Bestimmung der Drehzahl einer Welle**

(57) Zur möglichst exakten Drehzahlbestimmung einer Welle (1), an der umlaufend eine Anzahl von abtastbaren Signalgebern (SG) in äquidistanten Geberpositionen (n) angeordnet sind, werden Zeitintervall-Kennwerte (T(n)) der von aufeinander folgenden Signalgebern (SG) abgegebenen Signalimpulse (SI) ermittelt, wobei einer Geberposition (n) im Bereich einer Geberlücke (GL) der für einen um einen vorgegebenen Winkel (α) periodisch versetzt angeordnete Geberposition (n) ermittelte Kennwert (T(n)) zugeordnet wird. Eine Vorrichtung zur Durchführung des Verfahrens umfasst eine Rechnereinheit (8) mit einem Zähler- und Timermodul (7,9) und mit einem Auswertemodul (11), dessen selbstlernender Algorithmus jeder Geberposition (n) im Bereich der Geberlücke (GL) einen während einer winkelversetzten Lernphase ermittelten Kennwert (T(n)) zuordnet.

Fig. 2

EP 1 304 578 A2

**Beschreibung**

Die Erfindung bezieht sich auf ein Verfahren zur Bestimmung der Drehzahl einer Welle, insbesondere einer Antriebswelle eines Verbrennungsmotors in einem Kraftfahrzeug, an der umlaufend eine Anzahl von abtastbaren Signalgebern in äquidistanten Geberpositionen, sowie eine definierte Geberlücke angeordnet sind. Sie bezieht sich weiter auf eine Vorrichtung zur Durchführung des Verfahrens.

Aus der DE 44 09 846 A1 ist ein "Drehzahlerfassungsgerät für einen rotierenden Körper" bekannt. Mit Hilfe des dort offenbarten Gegenstandes wird die Aufgabe gelöst, die Drehzahl eines rotierenden Körpers unter gleichzeitiger Korrektur eines Erfassungsfehlers zu erfassen. Als Ursache für solche Erfassungsfehler werden z. B. Deformationen der Drehungserfassungsabschnitte aufgrund von Verarbeitungsfehlern oder infolge von Korrossion bis hin zum Fehlen eines Drehungserfassungsabschnittes des Signalrotors (z. B. Zahn eines Geberrades) angegeben. Aber auch überlagerte Störungen, die in Form von Vibrationen von außen in das System eingebracht werden, werden als Ursache für Erfassungsfehler angesehen.

Der Gegenstand dieses Patentes zielt nun darauf ab, genau diese Ungleichförmigkeiten der Drehbewegung auf rechnerischem Weg zu eliminieren und einen möglichst gleichförmigen, harmonischen Drehzahlverlauf darzustellen.

Durch das Fehlen einer definierten Referenzmarke z. B. einer Geberlücke auf dem Signalrotor ist eine absolute Drehwinkelbestimmung nicht möglich.

Weiterhin können durch diese Anordnung periodisch auftretende Drehungleichförmigkeiten des Drehkörpers, wie zum Beispiel einer Kurbelwelle eines Verbrennungsmotors nicht erfasst werden, da diese durch den angegebenen Algorithmus eliminiert werden.

Bei einer z.B. aus der WO 01/14944 A1 (PCT/DE 00/02766) bekannten Anwendung eines Starter-Generators in einem Kraftfahrzeug wird ein so genannter Kurbelwellensensor als Drehzahlsensor des Verbrennungsmotors genutzt, um eine Drehzahl und/oder inkrementelle Winkelinformationen für den Betrieb des Starter-Generators zu erhalten. Dies ist insbesondere beim Einsatz einer Asynchronmaschine als Starter-Generator möglich.

Die Drehzahlerfassung des Verbrennungsmotors erfolgt dabei üblicherweise mittels eines so genannten 60-2-Geberrades als Teil eines Drehzahl- oder Kurbelwellensensors mit auf der Maschinenwelle angeordneten und dabei umlaufend in äquidistanten Geberpositionen abtastbaren Signalgebern in Form von Zähnen oder aktiven magnetischen Teilstücken. Dabei sind rechnerisch zwar 60 Teilungen und damit eine entsprechende Anzahl von Geberpositionen über den Umfang gleichmäßig verteilt. Jedoch fehlen an einer Stelle im Bereich einer sogenannten Geberlücke zwei aufeinander folgende Signalgeber und damit zwei aufeinander folgende Signalimpulse während der Drehzahlmessung. Diese Geberlücke kann von der Motorsteuerung des Verbrennungsmotors erkannt werden und dient üblicherweise als Indexierung oder Referenzmarke zur Feststellung einer absoluten Winkelposition der Welle.

Bei der mit einem solchen Wellendrehzahlsensor durchgeführten Drehzahl- oder Geschwindigkeitsmessung handelt es sich um eine Bewegungsdifferenzmessung zwischen zwei sich relativ zueinander bewegenden Objekten, nämlich einem ortsfesten Sensorkopf und einem mit der Welle rotierenden Impulsrad. Die Weg- bzw. Winkelmessung erfolgt dabei üblicherweise durch Zählen von Signalimpulsen, wobei einerseits das Zeitintervall zwischen zwei als Signalgeber wirksamen Zähnen und andererseits die jeweilige Zahnnummer erfasst wird. Durch Erfassung der jeweiligen Zahn- oder Signalgebernummer ist die Relativposition zwischen dem Drehzahlsensor oder Impulsrad und dem Sensorkopf bestimmbar.

Den einzelnen Zähnen oder Teilungen und damit den jeweiligen Geberpositionen zugeordnete Nummern sind somit bei einem 60-2-Geberrad die Nummern bzw. Positionen 1 bis 60 oder 0 bis 59. Allgemein sind einem solchen Geberrad mit n Teilungen oder Zähnen entsprechend n Geberpositionen zugeordnet. Aus der Zeitdifferenz oder dem Zeitintervall zwischen zwei benachbarten Zähnen bzw. Teilungen und damit zwischen zwei benachbarten Geberpositionen lässt sich die Geschwindigkeit in diesem Wegabschnitt zwischen zwei Geberpositionen und damit die Drehzahl der Welle bestimmen.

Aufgrund der als Referenzmarke vorgesehenen Geberlücke werden in deren Bereich keine Signalimpulse abgegeben, so dass bei zwei fehlenden Signalgebern über drei Zeitintervalle keine korrekte Drehzahlmessung möglich ist. Dadurch können Änderungen der momentanen Drehzahl im Bereich der Geberlücke prinzipbedingt nicht direkt erfasst werden. Aufgrund des Arbeitsprinzips der üblichen Motorsteuerung, bei dem die Geberlücke im Bereich zwischen zwei Zündungen liegt, ist jedoch gerade im Bereich der Drehzahllücke mit großen Drehzahlgradienten zu rechnen.

Insbesondere für den Betrieb des Starter-Generators ist dieses prinzipbedingte Verhalten innerhalb der Geberlücke zu beachten, da der Starter-Generator als elektrische Maschine bei nicht korrekt gemessener oder bestimmter Drehzahl mit nicht idealem Verhalten reagiert. Dies wiederum kann insbesondere zu Schwankungen des Drehmoments und auch des Batteriestroms führen. Da sowohl Drehmomentschwankungen als auch Wechselanteile im Batteriestrom äußerst unerwünscht sind, wird eine möglichst exakte Bestimmung der Drehzahl angestrebt.

Ein weiterer störender Effekt ist eine insbesondere fertigungsbedingte Toleranz insbesondere auch derjenigen Signalimpulse, die zur Geberlücke direkt benachbart sind. So können abhängig von der Ausführung, dem Fertigungsverfahren und der Sensoreigenschaften erheblich größere Toleranzen in diesem Bereich auftreten als bei anderen Teilungen bzw. Geberpositionen. Auch kann die Toleranz für den Abstand von einem Signalimpuls zum nächsten Signalimpuls durchaus um einen Faktor 10 und damit um eine Größenordnung kleiner sein als die Toleranz der letzten Teilung und damit der letzten Geberposition vor der Geberlücke. Dies führt automatisch zu einem erheblichen Fehler in der Bestimmung der Drehzahl. Die Ansteuerung der elektrischen Maschine, d.h. des Starter-Generators, kann damit auf falschen Eingangsgrößen beruhen, so dass sich demzufolge fehlerhafte Ausgangsspannungen und Frequenzen ergeben. Dies wiederum führt zwangsläufig zu einer großen impulsförmigen oder transienten Störung im Drehmoment und auch im Batteriestrom.

Der Erfindung liegt daher die Aufgabe zugrunde, ein besonders geeignetes Verfahren zur Bestimmung der Drehzahl einer Welle mittels eines eine Geberlücke aufweisenden Drehzahlsensors anzugeben, bei dem unter Vermeidung der genannten Nachteile eine möglichst exakte Drehzahlerfassung gewährleistet ist. Des Weiteren soll eine zur Durchführung des Verfahrens besonders geeignete Vorrichtung angegeben werden.

Bezüglich des Verfahrens wird diese Aufgabe erfindungsgemäß gelöst durch die Merkmale des Anspruchs 1. Dazu werden Zeitintervall-Kennwerte der von aufeinander folgenden Signalgebern abgegebenen Signalimpulse ermittelt, wobei einer Geberposition im Bereich der Geberlücke als Intervall-Kennwert derjenige Kennwert zugeordnet wird, der für eine um einen vorgebbaren Winkel versetzt angeordnete Geberposition ermittelt wurde. Mit anderen Worten: Ein aufgrund der Geberlücke für die dortige Geberposition nicht ermittelbarer Kennwert wird ersetzt durch einen Kennwert an einer anderen Geberposition, an der periodisch versetzt die zumindest annähernd gleichen Verhältnisse herrschen, wie an der entsprechenden nicht vorhandenen Geberposition im Bereich der Lücke.

Die Ermittlung oder Bestimmung sowie die Zuordnung des jeweils geeigneten Kennwerts zur entsprechenden Geberposition im Bereich der Geberlücke erfolgt zweckmäßigerweise mittels eines selbstlernenden Algorithmus, der während einer Lernphase an den Geberpositionen im Bereich des Versatzwinkels die Kennwerte sowie deren Veränderungen beobachtet und daraus die Ersatzwerte oder Ersatzkennwerte für die Geberlücke ableitet.

Die Erfindung geht dabei von der Überlegung aus, dass aufgrund erkanntermaßen periodischer und damit symmetrischer Schwankungen der Drehzahl eines mehrzylindrigen Verbrennungsmotors sich die Verhältnisse bei jeder Periode zumindest annähernd gleichen. So erfolgt erkanntermaßen bei einem Viertaktmotor infolge der prinzipbedingt stoßweisen Energieeinleitung des Verbrennungsmotors ein Pulsieren der Momentandrehzahl des Motors und damit der mit diesem verbundenen oder gekuppelten Antriebswelle, wobei die Periodizität dieses Vorgangs bei einem Viertakt-Motor eine Gradzahl von 720° dividiert durch die Zahl der Zylinder ist. Bei einem Vierzylindermotor ist daher die Periodizität 180°, was zwei Zyklen (Zündungen) pro Wellenumdrehung oder mechanischer Umdrehung des ggf. vorhandenen Starter-Generators entspricht.

Erkanntermaßen kann nun davon ausgegangen werden, dass sich die Verhältnisse der oder einer Zündung eines Zylinders nicht signifikant von den anderen Zündungen bzw. Zylindern unterscheiden. Auch beim Betrieb mit Zylinderabschaltung, bei dem insbesondere im Teillast- oder Leerlauf des Verbrennungsmotors bestimmte Zylinder abgeschaltet werden, kann davon ausgegangen werden, dass sich die Verhältnisse hinsichtlich der Drehzahlschwankungen - ggf. mit veränderter Symmetrie - periodisch wiederholen.

Die Beobachtung des Drehzahlverlaufs eines vorhergehenden Zeitraums kann daher durch die konstruktiven Merkmale des Verbrennungsmotors als Schätzwert für den nicht beobachtbaren Verlauf im Bereich der Geberlücke - und auch als Ersatzwert für erheblich toleranzbehaftete Mess- oder Kennwerte in der Umgebung der Geberlücke - verwendet werden. So bietet sich bei einem Vierzylinder-Viertaktmotor an, den Verlauf zu beobachten, der sich der Geberlücke gegenüber befindet, also um 180° versetzt ist. Durch die Symmetrie des Motors ist zu erwarten, dass sich dieses Verhalten an einer um 180° versetzten Geberposition wiederholen wird. Somit können nicht gewinnbare oder in unerwünschtem Maße toleranzbehaftete Mess- bzw. Kennwerte durch solche Kennwerte ersetzt werden, die an einer um einen entsprechend versetzten Winkel vorhandenen Geberposition erfasst werden. Auch können Kennwerte aufgrund der gewonnenen Kenntnisse qualitativ verbessert werden.

Somit ist insgesamt ein selbstlernendes System bereitgestellt, dessen einzige Unsicherheit die Veränderung der Verbrennungsparameter von einem auf den nächsten Zylinder ist. Im Mittel bleiben diese Parameter erfahrungsgemäß jedoch sehr ähnlich, wobei nur bei plötzlichem Beschleunigen oder Abbremsen mit vergleichsweise großen Änderungen zu rechnen ist. Dieses selbstlernende System ermöglicht zudem unerwünschte toleranzbehaftete Geberpositionen oder Teilungen, die der Geberlücke benachbart sind, durch entsprechende Kennoder Schätzwerte zu ersetzen, bei denen der Schätzfehler kleiner ist als der Messwertfehler. Zudem ermöglicht dieses einfache, selbstlernende System unter Ausnutzung der konstruktiven Symmetrie mehrzylindriger Verbrennungsmotoren eine bestmögliche Anpassung an wechselnde Betriebszustände des Verbrennungsmotors eines Kraftfahrzeugs, insbesondere in Verbindung mit einem Starter-Generator.

Zweckmäßigerweise werden als Kennwert jeweils die Zeitdifferenz zwischen zwei gleichartigen Flanken eines rechteckförmigen Signalimpulses herangezogen. Zeitgleich mit dem jeweiligen Kennwert wird zudem die entsprechende Geberposition oder Positionsnummer erfasst.

Zu dem Zeitpunkt, in dem zur Geberlücke periodisch versetzte Signalimpulse derjenigen Geberpositionen erfasst werden, die in dem entsprechend periodisch versetzten Winkelbereich liegen, werden die entsprechenden Kennwerte zweckmäßigerweise zwischengespeichert. Diese gespeicherten Kennwerte werden dann nach Passieren der letzten Geberposition vor der Geberlücke an den dortigen Geberpositionen als Kennwerte herangezogen. Zudem können auch weitere Kennwerte zu denjenigen Geberpositionen gespeichert werden, die wiederum periodisch versetzt zu Geberpositionen mit hohen Toleranzen liegen, die insbesondere bei zur Geberlücke benachbarten Geberpositionen auftreten.

Den Geberpositionen im Bereich der Geberlücke werden vorteilhafterweise diejenigen Kennwerte zugeordnet, die an einer an einem Bruchteil von 360° liegenden Geberposition ermittelt worden sind. Der entsprechende Faktor ergibt sich dabei aus der Anzahl von sich innerhalb einer Wellenumdrehung periodisch zumindest annähernd wiederholenden Kennwerten und aus der Gradzahl zwischen zwei aufeinander folgenden Signalgebern.

Wiederholt sich beispielsweise der Kennwert jeweils nach einem Umlaufwinkel von 180° und ist - bei z. B. einer Anzahl von 60 umfangsseitig verteilt angeordneten Signalgebern - die Gradzahl zwischen zwei aufeinander folgenden Signalgebern 6°, so liegen - ausgehend von der Positionsnummer 1 bzw. 0 der unmittelbar hinter der Geberlücke liegenden Geberposition - bei der Geberposition 30 bzw. 29 erkanntermaßen zumindest annähernd dieselben Verhältnisse vor, wie an der in der Geberlücke liegenden Geberposition 60 bzw. 59, an der kein Signalgeber vorhanden ist.

Diese konkreten Verhältnisse liegen insbesondere bei einem Vierzylinder-Viertakt-Verbrennungsmotor vor, bei dem je Umdrehung der Antriebswelle zwei um 180° versetzte Zündzeitpunkte die Ursache für das periodische Schwingungsverhalten der Wellendrehzahl um eine mittlere Drehzahl sind. Um während der Drehzahlerfassung innerhalb einer Wellenumdrehung auftretende Beschleunigungs- und/oder Abbremsvorgänge mit entsprechend großen Abweichungen der Kennwerte aufeinander folgend erfasster Signalimpulse zu berücksichtigen, werden die den Geberpositionen in der Geberlücke zuzuordnenden Kennwerte vorteilhafterweise aus geeigneten Kennwertverhältnissen oder Kennwertdifferenzen ermittelt. Dazu wird zweckmäßigerweise einerseits der der letzten Geberposition vor der Geberlücke zugeordnete Kennwert und das Verhältnis bzw. die Differenz von Kennwerten herangezogen, die den entsprechend periodisch versetzten Geberpositionen zugeordnet sind.

Bezüglich der Vorrichtung wird die genannte Aufgabe erfindungsgemäß gelöst durch die Merkmale des Anspruchs 6. Vorteilhafte Ausgestaltungen sind Gegenstand der auf diesen rückbezogenen Unteransprüche.

Die Vorrichtung umfasst einen Drehzahlsensor, der von einem eine Geberlücke aufweisenden Signalgeber mit am Umfang der Welle äquidistanten Geberpositionen entsprechende Signalimpulse empfängt. Sie umfasst des Weiteren eine Rechnereinheit mit einem Timermodul, das die Zeitdifferenz aufeinander folgender Signalimpulse erfasst und den jeweiligen Geberpositionen zugeordnete Zeitintervall-Kennwerte sowie zweckmäßigerweise entsprechende Positionsnummern ausgibt. Zur Ermittlung der jeweiligen Geberposition wird nach jeder Wellenumdrehung mit dem ersten Signalgeber hinter oder nach der als Referenzmarke dienenden Geberlücke ein Zähler gestartet.

Ein Auswertemodul der Rechnereinheit ordnet selbstlernend jeder Geberposition im Bereich der Geberlücke einen Kennwert zu, der einer um den vorgegebenen Winkel periodisch versetzt angeordneten Geberposition zugeordnet ist. Die Zuordnung erfolgt mittels eines Algorithmus des Auswertemoduls, indem dieser den in einer Lernphase am periodisch versetzten Winkel ermittelten Kennwert in die Geberlücke für die entsprechende Geberposition einsetzt.

Die Rechnereinheit umfasst in vorteilhafter Ausgestaltung zudem einen Kennwertspeicher, in dem mindestens ein einer im Bereich des vorgegebenen Winkels liegenden Geberposition zugeordneter Zeitintervall-Kennwert hinterlegt ist. Dieser Kennwert oder eine den Geberpositionen in der Geberlücke entsprechende Anzahl von Kennwerten wird dann periodisch versetzt aus dem Speicher ausgelesen und den entsprechenden Geberpositionen in der Geberlücke zugeordnet.

Der periodisch versetzte Winkel entspricht dabei dem Vielfachen der Gradzahl zwischen zwei benachbarten Geberpositionen. Die Anzahl der dem Versatz entsprechenden Geberpositionen hängt dabei von der jeweiligen Periodizität der symmetrischen Drehzahlschwankungen ab. Bei einem Signalgeber mit 60 Teilungen und einer Periodizität von 120° im Falle eines Sechszylinder-Verbrennungsmotors oder von 180° im Falle eines Vierzylinder-Verbrennungsmotors ergibt sich somit ein Versatz von 20 bzw. 30 Geberpositionen.

In weiterer vorteilhafter Ausgestaltung umfasst die Rechnereinheit ein Steuermodul, das mit dem Auswertemodul verbunden ist und von diesem einen aus den Zeitintervall-Kennwerten ermittelten Drehzahl-Istwert empfängt. Der Drehzahl-Istwert repräsentiert dabei besonders exakt die tatsächliche Wellendrehzahl, die auch im Bereich der Geberlücke zumindest annähernd korrekt erfasst ist.

Die Vorrichtung eignet sich daher insbesondere für die Steuerung eines Starter-Generators eines Kraftfahrzeugs mit einer Verbrennungsmotors. Bei Anwendung eines Starter-Generators kann dieser infolge der vergleichsweise korrekt erfassten Drehzahl mit entsprechend idealem Verhalten reagieren. Dadurch werden insbesondere Schwankungen des Drehmomentes und/oder des Batteriestroms eines mit einem derartigen Starter-Generator ausgerüsteten Kraftfahrzeugs vermieden.

Nachfolgend wird ein Ausführungsbeispiel anhand einer Zeichnung näher erläutert. Darin zeigen:

FIG 1 schematisch in einem Blockschaltbild eine Vorrichtung zur Drehzahlbestimmung einer Welle mit einem Drehzahlsensor und einem lückenbehafteten Signalgeber sowie mit einer Rechnereinheit mit selbstlernendem Auswertealgorithmus,

FIG 2 ein von der Rechnereinheit verarbeitetes Impulssignal des Drehzahlsensors,

FIG 3 den Signalverlauf einer Drehzahlschwankung der Wellendrehzahl, und

FIG 4 ein Flussdiagramm des Auswertealgorithmus.

Einander entsprechende Teile sind in allen Figuren mit den gleichen Bezugszeichen versehen.

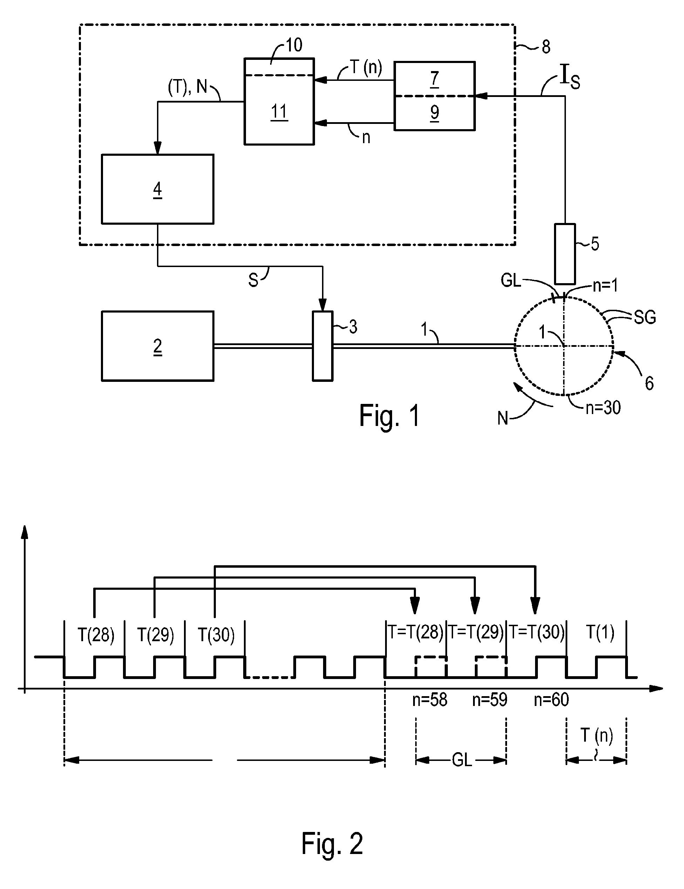

FIG 1 zeigt schematisch eine Vorrichtung zur Bestimmung der Drehzahl N einer Welle 1, die im Ausführungsbeispiel Teil der mechanischen Antriebsstruktur eines Kraftfahrzeugs mit einer Verbrennungsmaschine oder einem Verbrennungsmotor 2 und mit einem Starter-Generator 3 in Form einer Drehstrommaschine ist. Deren Rotor oder Läufer sitzt auf der angetriebenen Kurbelwelle 1, während deren Stator ortsfest angeordnet ist. Das vom Verbrennungsmotor 2 erzeugte innere Drehmoment führt zu einer der Motordrehzahl entsprechenden und mittels eines Drehzahl- oder Kurbelwellensensors 5 erfassten Ist-Drehzahl N der Kurbelwelle 1.

Zur Drehzahlerfassung ist die Kurbelwelle 1 umfangsseitig mit einer Anzahl von abtastbaren Signalgebern SG in äquidistanten Geberpositionen n versehen. Dabei können die Signalgeber SG in Form von Zähnen oder Magnetpolen ausgeführt sein. Nachfolgend wird davon ausgegangen, dass die Signalgeber SG durch ein 60-2-Geberrad 6 mit am Wellenumfang 58 Signalgebern SG und einer Geberlücke GL mit zwei fehlenden Signalgebern realisiert sind. Des Weiteren wird davon ausgegangen, dass dem ersten Signalgeber SG in Umfangsrichtung der Welle 1 hinter der als Referenzmarke dienenden Geberlücke 7 die Geberposition n = 1 zugeordnet ist, so dass innerhalb der Geberlücke GL die Geberpositionen n = 58, n = 59 und n = 60 liegen (FIG 2).

FIG 2 zeigt das Impulssignal IS, das der Drehzahlsensor 5 einem Timer 7 einer Recheneinheit 8 übergibt. Der Timer 7 liefert ausgangsseitig zu jeder Geberposition n einen Zeitintervall-Kennwert T(n), der der Zeitdifferenz zwischen zwei gleichartigen Flanken F der von aufeinander folgenden Signalgebern SG abgegebenen Signalimpulse SI entspricht. Gleichzeitig liefert der Timer 7 die dem jeweiligen Zeitintervall-Kennwert T(n) zugeordnete Geberposition oder Positionsnummer n. Dazu startet ein Zähler 9 bei jeder Wellenumdrehung mit dem ersten hinter der Geberlücke GL liegend Signalgeber SG und zählt die aufeinander folgend abgegebenen Signalimpulse SI numerisch fortlaufend, beginnend an der Geberposition n = 1. Der letzte erfasste Signalimpuls SI entspricht dann der letzten Geberposition n = 57 vor der Geberlücke GL. Nach drei weiteren Zeitintervall-Kennwerten T(n), deren Ermittlung nachfolgend beschrieben wird, startet der Zähler 9 von neuem.

Innerhalb der Recheneinheit 8 werden die Zeitintervall-Kennwerte T(n) und die entsprechenden Geberpositionen n in einem Kennwertspeicher 10 eines Auswertemoduls 11 zumindest teilweise zwischengespeichert. Dabei werden den Geberpositionen n = 58, n = 59 und n = 60 die Zeitintervall-Kennwerte T(n) von um einen bestimmten Winkel α versetzt positionierten Geberpositionen n, n+1 bzw. n+2 zugeordnet.

Aus den Zeitintervall-Kennwerten T(n) generiert das Auswertemodul 11 gemäß der Beziehung $T^{-1} \cdot c$ die zugehörigen Winkelgeschwindigkeitswerte ω(T), wobei $c = 2\pi p/60$ und p die Polpaarzahl des als Asynchronmaschine ausgeführten Starter-Generators 3 ist. Die zur Drehzahlinformation und damit zur Ist-Drehzahl N gleichwertige Winkelgeschwindigkeit ω(T) wird dem Steuermodul 4 der Recheneinheit 8 als Eingangsgröße zugeführt, wobei T die erfaßte Zahn- oder Geberpositionszeit ist. Das auch die Funktionalität der Ansteuerung oder Regelung des Starter-Generators 3 beinhaltende Steuermodul 4 liefert ausgangsseitig ein entsprechendes, z. B. dreiphasiges Steuersignal S an den Starter-Generator 3.

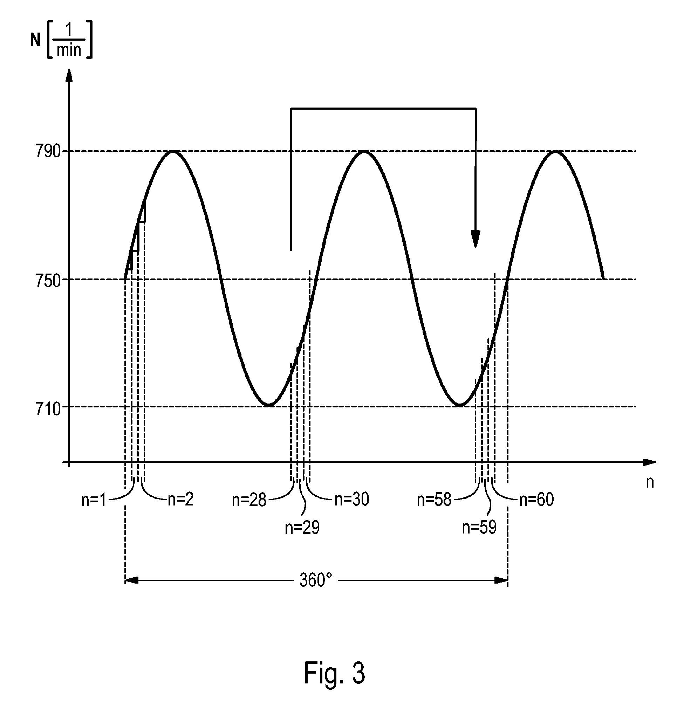

Zur Ermittlung geeigneter Zeitintervall-Kennwerte T(n), die den in der Geberlücke GL liegenden Geberpositionen n zuzuordnen sind, wird das erkanntermaßen symmetrische Schwankungsverhalten der Wellen-Drehzahl N herangezogen, wie dies in FIG 3 anhand von Drehzahlschwankungen eines Vierzylinder-Verbrennungsmotors 2 vereinfacht veranschaulicht ist. Dargestellt sind die periodischen Drehzahlschwankungen innerhalb eines 360°-Winkels einer Wellenumdrehung um eine auf der Ordinate abgetragene Leerlaufdrehzahl von beispielhaft 750 U/min. Auf der Abszisse ist die Teilung des Geberrades 6 mit den im Ausführungsbeispiel 60 Geberpositionen n abgetragen. Erkennbar ist insbesondere das sich zyklisch wiederholende Verhalten der Drehzahlschwankungen, wobei davon ausgegangen werden kann, dass sich die Drehzahlverhältnisse periodisch wiederholen.

Dabei konnte festgestellt werden, dass auf der Grundlage von zwei Wellenumdrehungen und einem daraus resultierenden Winkel von 720° in Abhängigkeit von der Zylinderzahl des Verbrennungsmotors 2 eine Periodizität gegeben ist gemäß der Beziehung $z^{-1} \cdot 720°$, wobei z die Anzahl der Zylinder ist. Im konkreten Ausführungsbeispiel ergibt sich nach dieser Beziehung mit z = 4 eine Periodizität von 180°. Dies bedeutet, dass die Zeitintervall-Kennwerte T(n) an Geberpositionen n, bei denen um den entsprechenden Winkel - hier 180° - periodisch versetzt die zumindest annähernd gleichen Verhältnisse vorliegen, mit diesen Zeitintervall-Kennwerten T(n) zumindest annähernd identisch sind. Diese Verhältnisse liegen erkennbar an den um 180° versetzten Geberpositionen n vor.

Im Ausführungsbeispiel liegt die Geberlücke GL mit den Geberpositionen n = 58, n = 59 und n = 60 bei $\alpha = 360°$, so dass davon ausgegangen werden kann, dass an periodisch versetzten, d. h. im Winkelbereich von $\alpha = 180°$ liegenden Geberpositionen n = 28, n = 29 bzw. n = 30, zumindest annähernd gleiche Verhältnisse vorliegen, wie in der Geberlücke GL. Demzufolge können auch die diesen Geberpositionen n = 28, n = 29 und n = 30 zugeordneten Zeitintervall-Kennwerten T(n) für die um 180° versetzten Geberpositionen n = 58, n = 59 und n = 60 herangezogen werden. Dies ist in den FIG 2 und 3 durch die Pfeile symbolisch dargestellt.

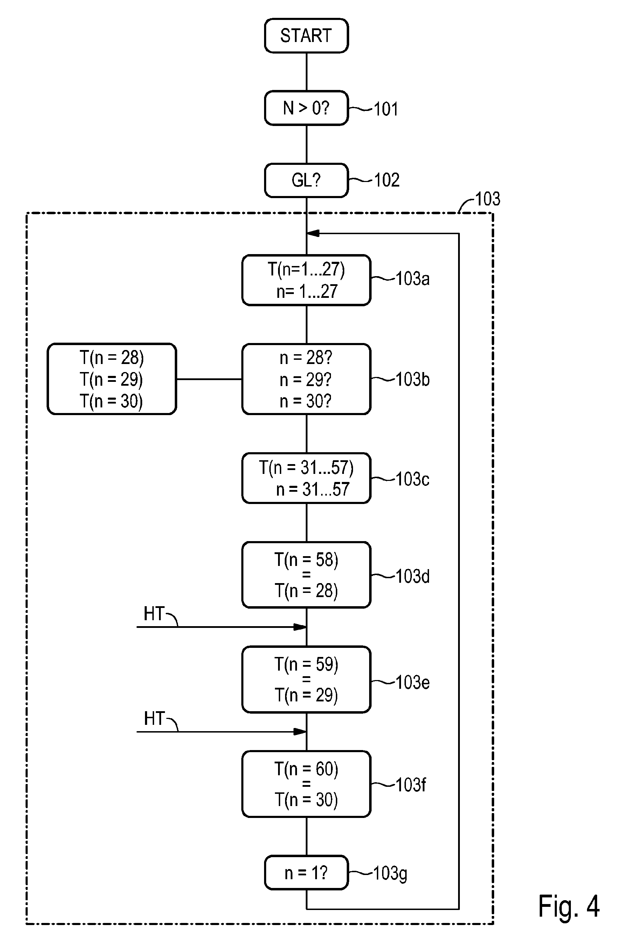

Die Ermittlung und Zuordnung geeigneter Zeitintervall-Kennwerte T(n) zu den in der Geberlücke GL liegenden Geberpositionen n erfolgt mittels eines Algorithmus der Rechnereinheit 8 innerhalb des Auswertemoduls 11, wobei das entsprechende Flussdiagramm in FIG 4 dargestellt ist. Dabei wird in einem ersten Programmschritt 101 abgefragt, ob der Verbrennungsmotor 2 läuft und damit eine von 0 verschiedene Drehzahl N > 0 vorliegt. Ist dies der Fall, so wird im nächsten Programmschritt 102 die Geberlücke GL als Referenzmarke erfasst und somit die Drehzahlerfassung synchronisiert.

Im nächsten Programmschritt 103 erfolgt die Erfassung der Zeitintervall-Kennwerte T(n = 1,2,3,...,m) zu den einzelnen Geberpositionen n = 1,2,3,...,m. Gleichzeitig werden die aufeinander folgenden Signalimpulse SI gezählt und die entsprechenden Geberpositionen n numerisch erfasst. Sind im Programmteilschritt 103a im Anschluß an die Geberposition n = 27 die um die in dem vorbestimmten Versatzwinkel $\alpha$ von im Ausführungsbeispiel 180° angeordneten Geberpositionen n = 28, n = 29 und n = 30 erreicht, so werden im Programmteilschritt 103b die diesen zugeordneten Zeitintervall-Kennwerte T(n = 28), T(n = 29) bzw. T(n = 30) abgespeichert.

Ist nach erfolgter Erfassung der Zeitintervall-Kennwerte T(n = 31,...,57) zu den folgenden Geberpositionen n = 31,...,57 im Programmteilschritt 103c im Anschluß an die Geberposition n = 57 des letzten vor der Geberlücke GL liegenden Signalgebers SG erreicht, so wird im folgenden Programmteilschritt 103d der Zeitervall-Kennwert T(n = 28) als Erwartungswert für die Geberposition n = 58 eingesetzt. Analog wird im nächsten Programmteilschritt 103e der gespeicherte Zeitervall-Kennwert T(n = 29) für die in der Geberlücke GL folgende Geberposition n = 59 eingesetzt. Entsprechend wird im Programmteilschritt 103f der weiteren Geberposition n = 60 in der Geberlücke GL der Zeitervall-Kennwert T(n = 30) zugeordnet. Dazu erfolgt zweckmäßigerweise eine Hilfstriggerung, die den entsprechenden Zeitpunkt für das Einsetzen des jeweiligen Kennwertes T(n = 29) bzw. T(n = 30) angibt. Als Hilfstrigger HT zur sequentiellen Ausführung zumindest der Programmteilschritte 103e und 103f wird dabei zweckmäßigerweise das Zeitintervall eines der letzten vor der Geberlücke GL liegenden Kennwertes, z. B. T(n = 55) oder T(n = 56), mit möglichst geringer Toleranz herangezogen.

Im nächsten Programmschritt 103g wird infolge des an der Geberposition n = 1 angeordneten Signalgebers SG der Zähler 9 von neuem gestartet und die sich im Programmschritt 103 ergebende Lernphase mit den Programmteilschritten 103a bis 103f wird erneut durchlaufen.

Um auch innerhalb einer Wellenumdrehung erfolgende Beschleunigungs- und/oder Abbremsvorgänge mit den dadurch bedingten relativen Änderungen zwischen aufeinander folgenden Zeitintervall-Kennwerten T(n) zu berücksichtigen, kann während der Lernphase innerhalb der Programm- oder Programmteilschritte 103a bis 103f auch ein geeignetes Kennwert-Verhältnis, eine geeignete Kennwert-Differenz oder eine Kombination hiervon herangezogen werden. So können die Zeitintervall-Kennwerte T(n) zu den Geberpositionen n innerhalb der Geberlücke GL auch ermittelt werden gemäß den Beziehungen:

$$T(n = 58) = T(n = 57) \cdot T(n = 28)/T(n = 27)$$

$$T(n = 59) = T(n = 57) \cdot T(n = 29)/T(n = 27)$$

$$T(n = 60) = T(n = 57) \cdot T(n = 30)/T(n = 27)$$

Dabei wird der letzte bekannte Zeitintervall-Kennwert T(n = 57) vor der Geberlücke GL und zudem eine Vorhersage hinsichtlich des Gradienten, d.h. der relativen Änderungen aus der Beobachtungs- oder Lernphase an den Geberpositionen n = 28, n = 29 und n = 30 im Bereich des Versatzwinkels $\alpha = 180°$ genutzt. Dadurch wird eine besonders präzise Drehzahlerfassung bzw. Drehzahlbestimmung auch bei Drehzahlveränderungen erzielt.

Eine derartige Drehzahlveränderung ebenfalls berücksichtigende, jedoch vergleichsweise einfache Berechnungsmethode mit vergleichsweise geringem Rechenaufwand kann durch eine Differenzbildung erzielt werden. Dazu werden die Zeitintervall-Kennwerte T(n) zu den Geberpositionen n innerhalb der Geberlücke GL ermittelt gemäß den Beziehungen:

$$T(n = 58) = T(n = 57) + (T(n = 28) - T(n = 27))$$

$$T(n = 59) = T(n = 57) + (T(n = 29) - T(n = 27))$$

$$T(n = 60) = T(n = 57) + (T(n = 30) - T(n = 27))$$

Mit dieser der Differenzbildung aus während der Lernphase innerhalb des Programmschritts 103 ermittelten Zeitintervall-Kennwerte $T(n)$ sind ebenfalls die relativen Änderungen aus der Beobachtungs- bzw. Lernphase an den um den vorgegebenen Versatzwinkel $\alpha = 180°$ liegenden Geberpositionen n für die Kennwerte $T(n)$ der in der Geberlücke GL liegenden Geberpositionen n bestimmbar.

Die angegebenen Beziehungen für $T(n)$ können aufgrund des Zusammenhangs zwischen der Zeit und der Winkelgeschwindigkeit nach $\omega = c \cdot T^{-1}(n)$ auch mit den entsprechenden Winkelgeschwindigkeits-Kennwerten $\omega(n)$ berechnet werden.

**Patentansprüche**

1. Verfahren zur Bestimmung der Drehzahl (N) einer Welle (1), an der umlaufend eine Anzahl von abtastbaren Signalgebern (SG) in äquidistanten Geberpositionen (n), sowie eine Geberlücke (GL) angeordnet sind,

   - wobei Zeitintervall-Kennwerte ($T(n)$) der von aufeinander folgenden Signalgebern (SG) abgegebenen Signalimpulse (SI) ermittelt werden, und
   - wobei mindestens einer Geberposition (n) im Bereich der Geberlücke (GL) ein Zeitintervall-Kennwert zugeordnet wird, der für eine, um einen vorgegebenen Winkel ($\alpha$) periodisch versetzt angeordnete, Geberposition (N) ermittelt wird.

2. Verfahren nach Anspruch 1, bei dem als Kennwert ($T(n)$) jeweils die Zeitdifferenz zwischen zwei gleichartigen Flanken (F) eines rechteckförmigen Signalimpulses (SI) herangezogen werden, wobei zeitgleich mit dem jeweiligen Kennwert ($T(n)$) die diesem zugeordnete Geberposition (n) erfasst wird.

3. Verfahren nach Anspruch 1 oder 2, bei dem im Bereich des versetzten Winkels ($\alpha$) eine der Anzahl der im Bereich der Geberlücke (GL) fehlenden Signalgeber (SG) entsprechende Anzahl von Kennwerten ($T(n)$) von aufeinander folgend abgegebenen Signalimpulsen (SI) gespeichert und bei Erreichen der Geberlücke (GL) als Zeitintervall-Kennwert ($T(n)$) herangezogen werden.

4. Verfahren nach einem der Ansprüche 1 bis 3, bei dem einer ersten Geberposition (n) im Bereich der Geberlücke (GL) der an der Geberposition $n = a^{-1} \cdot b^{-1} \cdot 360°$ ermittelte Kennwert ($T(n)$) zugeordnet wird, wobei a die Anzahl von sich innerhalb einer Wellenumdrehung periodisch zumindest annähernd wiederholenden Kennwerten ($T(n)$) und b die Gradzahl zwischen zwei aufeinander folgenden Signalgebern (SG) ist.

5. Verfahren nach einem der Ansprüche 1 bis 4, bei dem der der jeweiligen Geberposition (n) im Bereich der Geberlücke (GL) zugeordnete Kennwert ($T(n)$) aus dem Kennwert ($T(n)$) des an der letzten Geberposition (n) vor der Geberlücke (GL) erfassten Signalimpulses (SI) und dem Verhältnis oder der Differenz der Kennwerte ($T(n)$) von an zwei Geberpositionen (n) im Bereich des versetzten Winkels ($\alpha$) erfassten Signalimpulsen (SI) ermittelt wird.

6. Vorrichtung zur Bestimmung der Drehzahl (N) einer Welle (1), insbesondere zur Durchführung des Verfahrens nach einem der Ansprüche 1 bis 5, mit einem Drehzahlsensor (5), der von einem eine Geberlücke (GL) aufweisenden Signalgeber (6) mit am Umfang der Welle (1) äquidistanten Geberpositionen (n) Signalimpulse (SI) empfängt, und mit einer Rechnereinheit (8)

   - mit einem Zähler- und Timermodul (7,9), das die Zeitdifferenz aufeinander folgender Signalimpulse (SI) erfasst und den jeweiligen Geberpositionen (n) zugeordnete Zeitintervall-Kennwerte ($T(n)$) ausgibt, sowie
   - mit einem Auswertemodul (11), dessen Algorithmus jeder Geberposition (n) im Bereich der Geberlücke (GL) einen in einer Lernphase an einem periodisch versetzten Winkel ($\alpha$) ermittelten Kennwert ($T(n)$) zuordnet.

7. Vorrichtung nach Anspruch 6, wobei die Rechnereinheit (8) einen Kennwertspeicher (10) aufweist, in dem mindestens ein einer im Bereich des vorgegebenen Winkels ($\alpha$) liegenden Geberposition (n) zugeordneter Zeitintervall-Kennwert ($T(n)$) hinterlegt ist.

8. Vorrichtung nach Anspruch 6 oder 7, wobei das Auswertemodul (11) aus dem der letzten Geberposition (n) vor der Geberlücke (GL) zugeordneten Kennwert ($T(n)$) und aus mindestens zwei weiteren, im Bereich des versetzten Winkels ($\alpha$) liegenden Geberpositionen (n) zugeordneten Kennwerten ($T(n)$) einen Zeitintervall-Kennwert ($T(n)$) ermittelt und diesen der jeweils periodisch versetzten Geberposition (n) in der Geberlücke (GL) zuordnet.

9. Vorrichtung nach einem der Ansprüche 6 bis 8, wobei das Auswertemodul (11) einen aus den Zeitintervall-Kennwerten ($T(n)$) ermittelten Drehzahl-Istwert (N) an ein Steuermodul (4) der Recheneinheit (8) abgibt.

**10.** Steuerung eines Starter-Generators (3), insbesondere eines Kraftfahrzeugs mit einem Verbrennungsmotor (2), mit einer Vorrichtung nach einem der Ansprüche 6 bis 9.

Fig. 1

Fig. 2

Fig. 3

Fig. 4